## Europäisches Patentamt

## European Patent Office

## Office européen des brevets

(19)

(11) Veröffentlichungsnummer: **0 072 507**
**B1**

(12) **EUROPÄISCHE PATENTSCHRIFT**

(45) Veröffentlichungstag der Patentschrift:
**29.03.89**

(21) Anmeldenummer: **82107106.5**

(22) Anmeldetag: **06.08.82**

(51) Int. Cl.⁴: **H 04 N 9/81**

(54) **Verfahren und Schaltungsanordnung zum Aufzeichnen und/oder Wiedergeben von breitbandigen Signalen.**

(30) Priorität: **12.08.81 DE 3131853**
**05.04.82 DE 3212665**

(43) Veröffentlichungstag der Anmeldung:
**23.02.83 Patentblatt 83/8**

(45) Bekanntmachung des Hinweises auf die Patenterteilung:
**29.03.89 Patentblatt 89/13**

(84) Benannte Vertragsstaaten:
**AT CH DE FR GB LI NL**

(56) Entgegenhaltungen:
**DE-A-2 056 684**
**DE-A-2 740 942**
**DE-A-2 945 615**
**GB-A-2 071 960**

(73) Patentinhaber: **ROBERT BOSCH GMBH, Postfach
10 60 50, D-7000 Stuttgart 10 (DE)**

(72) Erfinder: **Horstmann, Winfried, Kantstrasse 20,
D-6103 Griesheim (DE)**

LIBER, STOCKHOLM 1989

## Beschreibung

### Stand der Technik

Die Erfindung geht aus von einem Verfahren zum Aufzeichnen und/oder Wiedergeben von breitbandigen Signalen, insbesondere von Farbvideosignalen, nach der Gattung des unabhängigen Aunspruchs 1 und von einen Verfahren zum Aufzeichnen und/oder Wiedergeben von Farbvideosignalen gemäß den Oberbegriff des Anspruchs 8.

Das fortwährende Bemühen um die Erhöhung der Speicherdichte bei Magnetbandgeräten für die Aufzeichnung von Farbfernsehsignalen hat zur Einführung einer Reihe von Maßnahmen geführt, von denen jede einen gewissen Beitrag zur Realisierung dieser Aufgabe liefert. Die bekannten Maßnahmen lassen sich grob in zwei Kategorien einteilen: Die erste Kategorie von Lösungsmaßnahmen befaßt sich mit der Erhöhung der nutzbaren Frequenzbandbreite eines vorgegebenen Magnetband-Gerätetyps bzw. der Herabsetzung der notwendigen Relativgeschwindigkeit zwischen dem oder den Magnetwandlern und dem magnetischen Aufzeichnungsträger unter Beibehaltung der höchsten übertragbaren oberen Grenzfrequenz. Durch Verkleinerung der relevanten Abmessungen für Magnetwandler und durch Verbesserung der magnetischen Eigenschaften der Aufzeichnungsträger lassen sich bis zu einem gewissen Grad die aufzuzeichnenden kleinsten Wellenlängen noch weiter verringern, wodurch der oben angegebene Effekt eintritt.

Eine weitere Maßnahme zur Erhöhung der Speicherdichte unter Beibehaltung der Aufzeichnungsqualität bei gleichzeitig geringeren Anforderungen an mechanische und elektrische Eigenschaften der Magnetbandgeräte ist das in der Technik seit langem gebräuchliche Verfahren zur Umsetzung der auf einem Hilfsträger in Quadratur modulierten Farbartsignale in ein Frequenzband, das sich an die untere Grenze des frequenzmodulierten Helligkeitssignals anschließt. Bei der Anwendung ergeben sich jedoch Schwierigkeiten durch die Tatsache, daß bei der Aufzeichnung des in der Frequenz umgesetzten Hilfsträgers mit der zur Erzielung eines ausreichenden Störabstandes notwendigen Amplitude Harmonische in das Frequenzband des Helligkeitssignals durchschlagen und zu Bildstörungen führen (Farbrauschen).

Eine zweite Kategorie von Verfahren zur Erhöhung der Speicherdichte bei der Speicherung von Signalen auf Magnetband ist durch die Aufteilung der Farbfernsehsignale in ein Luminanzsignal und ein Chrominanzsignal und deren gesonderte Aufzeichnung in getrennten Aufzeichnungsspuren gekennzeichnet. Dabei ist die Anordnung so getroffen, daß die erste Art von Signalen und die zweite Art von Signalen durch gesonderte Aufzeichnungsmagnetköpfe übertragen werden, wobei sich die erste Art und die zweite Art von Spuren zumindest teilweise überlappen und zur Vermeidung des Übersprechens die Kernspalte der Magnetköpfe der ersten und der zweiten Art in der Ebene des Magnetbandes einen Winkel einschließen (Azimut-Aufzeichnung).

Zur Unterdrückung des bei der Aufzeichnung ohne Zwischenraum zwischen den einzelnen Spuren auftretenden Übersprechens bei einem Magnetbandgerät zur Fernsehaufzeichnung, bei dem sich ein Magnetband wendelförmig um eine Abtasteinrichtung bewegt, in welcher ein Kopfrad mit zwei diametral einander gegenüberliegenden Magnetköpfen rotiert, sind die Synchronimpulse benachbarter Spuren so angeordnet, daß sie auch bei Abweichungen des Magnetkopfes von der Spur bei der Wiedergabe die Synchronisierung des wiedergegebenen Bildes nicht nachhaltig beeinflussen. Gleichzeitig ist damit eine wünschenswerte Vereinfachung bei Zeitlupen- oder Zeitrafferwiedergaben gegeben. Die Zusammenhänge bei der Ausrichtung der Synchronimpulse sind auch in einem Aufsatz von F.T. Backers und J.H. Wissels unter dem Titel "An experimental apparatus for recording television signals on magnetic tape" in Philips Technical Review, Vol. 24, Nr. 3, Seite 81 bis 83, 1982 beschrieben.

Es ist weiter ein Verfahren zur Übertragung und/oder Aufzeichnung von Farbfernsehsignalen bekannt, bei welchem die Farbinformation zeitkomprimiert zeilensequentiell während der Horizontal-Austastlücke übertragen und/oder aufgezeichnet wird, wobei ein breitbandiges Leuchtdichtesignal beibehalten und eine zuverlässige Synchronisierung gewährleistet werden soll. Die Leuchtdichteinformation wird dabei während etwa 80 % der Zeilendauer und die Farbinformation zeitkomprimiert zeilensequentiell während der Horizontal-Austastlücke eines genormten Farbfernsehsignals übertragen. Weiter werden die Farbsignale während des größten Teils der restlichen 20 % der Zeilendauer übertragen bzw. aufgezeichnet. Das bekannte Verfahren bietet eine Verbesserung der Auflösung und geringere Farbverfälschungen, weil bei der Übertragung bzw. Aufzeichnung entstehende Amplitudenfehler sich allenfalls als Farbsättigungsfehler, jedoch nicht als Farbartfehler bemerkbar machen. Wegen der sequentiellen Übertragung der Farbdifferenzsignale infolge der einkanaligen Verarbeitung unterliegt das bekannte Verfahren jedoch merklichen Einschränkungen bezüglich der Auflösung bei der Farbwiedergabe.

Ferner ist bekannt, den Bandbreitenbedarf bei der Aufzeichnung von breitbandigen Signalen dadurch zu reduzieren, daß diese Signale zeitlich nacheinander in n Gruppen aufgeteilt und in mehreren Kanälen aufgezeichnet werden. Dabei handelt es sich jedoch um einen dynamischen Speicher mit mehreren parallelen Spuren in Längsrichtung des Magnetbandes.

Aus der DE-AB-2 056 684 ist schließlich ein System zur Speicherung von Farbbildsignalen

bekannt, bei dem auf einer Spur eines Aufzeichnungsträgers ein Leuchtdichtesignal und ein demgegenüber schmalbandigeres Farbartsignal aufgezeichnet werden. Dabei wird während eines Teils der Zeilenperiode das zu dieser Zeilenperiode gehörende Farbartsignal zeitkomprimiert an Stelle des Leuchtdichtesignals und während des restlichen Teils der Zeilenperiode das entsprechende Leuchtdichtesignal aufgezeichnet. Mit dem bekannten System lassen sich zwar Störungen zwischen dem Leuchtdichte- und dem Farbartsignal vermeiden, weil diese Signale niemals gleichzeitig auf gezeichnet sind, wegen des unverändert großen oder bei zeitkomprimierter Aufzeichnung noch erhöhten Bandbreitenbedarfs des Leuchtdichtesignals kann jedoch die Übertragungsbandbreite eines vorgegebenen Übertragungskanals überschritten werden, so daß das wiedergegebene Bild vermindert aufgelöst ist.

**Vorteile der Erfindung**

Die erfindungsgemäßen Verfahren mit den Merkmalen der unabhängigen Ansprüche 1 und 8 haben demgegenüber den Vorteil, daß die vorhandene Speicherfläche auf dem Aufzeichnungsträger möglichst vollständig ausgenutzt wird, wobei die Signale durch entsprechende Zeittransformation auf etwa gleiche Bandbreite gebracht werden. Als weiterer Vorteil ist anzusehen, daß das Übersprechen zwischen den einzelnen Aufzeichnungskanälen reduziert wird.

Durch die in den Unteransprüchen aufgeführten Maßnahmen sind vorteilhafte Weiterbildungen und Verbesserungen möglich. Besonders vorteilhaft ist, daß die vollständige Farbinformation einer jeden Zeile zusammen mit dem entsprechenden Helligkeitssignal gespeichert wird und daher auch bei der Wiedergabe einer jeden Fernsehzeile zur Verfügung stehen.

Bei sehr schmalbandiger Auslegung der Übertragungskanäle hat es sich als zweckmäßig erwiesen, die Komponenten des Farbbildsignalgemisches getrennt in der Form Y, U und V aufzuzeichnen, wobei Y für das Helligkeitssignal (Luminanz) steht, während U das Farbdifferenzsignal B - Y und V das Farbdifferenzsignal R - Y darstellt. Liegen die Farbdifferenzsignale U und V sequentiell, also nur jeweils in jeder zweiten Zeile vor und werden die Signalkomponenten der vorbeschriebenen Zeittransformationen und Aufteilung auf mehrere Kanäle unterworfen, so erfolgt die Aufzeichnung der Farbkomponenten U in einem Aufzeichnungskanal nach dem zugehörigen Luminanzsignal Y einer Zeile und die Aufzeichnung der Farbkomponente V der nächsten Zeile in unmittelbarer Nähe von U in der benachbarten Spur mit der Folge ungenügender Übersprechdämpfung.

Das erfindungsgemäße Verfahren hat demgegenüber den Vorteil, daß auch bei der Komponentenaufzeichnung eines Farbvideosignals mit sequentiell vorliegenden Farbartsignalen in benachbarten Spuren des Magnetbandes gleichartige Signalkomponente aufgezeichnet werden, wodurch das Übersprechen zwischen den einzelnen Aufzeichnungskanälen reduziert wird. Besonders vorteilhaft ist, daß nach dem zeitlichen Abschluß einer Aufzeichnungssequenz in jedem Aufzeichnungskanal jeweils neben der Helligkeitsinformation auch die vollständige Farbinformation dieser Sequenz verfügbar ist.

**Zeichnung**

Ausführungsbeispiele der Erfindung sind in der Zeichnung dargestellt und in der nachfolgenden Beschreibung näher erläutert. Es zeigen

- Fig. 1 in schematischer Darstellung ein Kopfrad eines Magnetbandgerätes zur Verwendung in dem erfindungsgemäßen System,
- Fig. 2 schematisch ein Spurbild auf einem Magnetbandgerät, aufgezeichnet durch ein Kopfrad nach Fig. 1,
- Fig. 3 als Blockschaltbild ein Ausführungsbeispiel einer Schaltungsanordnung nach dem erfindungsgemäßen System,
- Fig. 4 ein Zeitschema zur Erläuterung des zeitlichen Zusammenhangs bei der Signalverarbeitung mittels der Schaltungsanordnung nach Fig. 3,
- Fig. 5 als Blockschaltbild ein anderes Ausführungsbeispiel einer Schaltungsanordnung,
- Fig. 6 das Zeitschema zur Erläuterung des zeitlichen Zusammenhangs bei der Signalverarbeitung mittels der Schaltungsanordnung nach Fig. 5,
- Fig. 7 als Blockschaltbild ein weiteres Ausführungsbeispiel einer Schaltungsanordnung nach dem erfindungsgemäßen System,
- Fig. 8 ein Zeitschema zur Erläuterung des zeitlichen Zusammenhangs bei der Signalverarbeitung mittels der Schaltungsanordnung nach Fig. 7.

**Beschreibung**

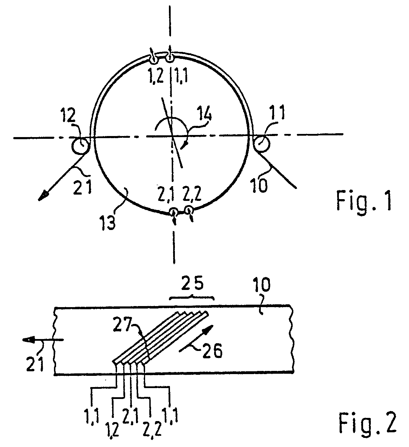

In Fig. 1 wird ein Magnetband 10 durch Umlenkelemente 11, 12 so um ein Kopfrad 13 geführt, daß es dieses in einem Winkel von etwa 180° umschlingt. Dabei beschreibt das Magnetband 10 eine halbe Helix, so daß die auf dem Kopfrad 13 angeordneten Magnetköpfe 1.1,

1.2, 2.1 und 2.2 das Magnetband 10 in einer Folge von schräg zur Bandkante angeordneten Spurabschnitten beschreiben. Diese Zusammenhänge sind in Fig. 2 näher erläutert. Von den auf dem Kopfrad 13 angeordneten Magnetköpfen bilden jeweils die Köpfe 1.1 und 2.1, sowie 1.2 und 2.2 einen Aufzeichnungs- bzw. Wiedergabekanal. Die jeweils einander diametral gegenüberliegenden Magnetköpfe sind also elektrisch so miteinander verschaltet, daß sie jeweils gleichzeitig elektrische Signale zur Aufzeichnung auf das Magnetband erhalten, bzw. bei der Wiedergabe das Magnetband abtasten und dabei gleichartige Signale aufnehmen.

Die räumliche Anordnung der Magnetköpfe auf dem Kopfrad 13 soll im weiteren unter Zuhilfenahme der Spuranordnung in Fig. 2 erläutert werden. Das Magnetband 10 in Fig. 2 wird mit gleichbleibender Geschwindigkeit durch bekannte und daher nicht weiter dargestellte Antriebseinrichtungen in Bandlängsrichtung, beispielsweise in Richtung des Pfeiles 21, transportiert. Das Kopfrad 13 mit den am Umfang befestigten Magnetköpfen rotiert rasch in Richtung des Pfeiles 14, wodurch infolge der Steigung des Magnetbandes während der 180°- Umschlingung auf dem Magnetband 10 eine Folge von Magnetspuren 25 geschrieben werden. Diese Spuren sind in Fig. 2 mit den Bezugszeichen der sie erzeugenden Magnetköpfe gekennzeichnet, und man erkennt, daß sich die Aufzeichnungssequenz nach jeweils 4 Spuren wiederholt. Die Richtung der Aufzeichnung auf dem Magnetband ist durch den Pfeil 26 angedeutet.

Die Magnetkopfpaare 1.1, 2.1 und 1.2, 2.2 sind auf dem Kopfrad 13 um einen gewissen Winkelbetrag in der Ebene des Kopfrades gegeneinander versetzt. Die beiden Magnetkopfpaare sind weiter senkrecht zur Zeichenebene in der Höhe gegeneinander versetzt und zwar derart, daß die jeweils diametral einander gegenüberliegenden Magnetköpfe in der gleichen Ebene rotieren. Die Größe des Winkelversatzes in der Kopfradebene und des Höhenversatzes senkrecht zu dieser ergibt sich vor allem aus dem Wunsch, auf dem Magnetband 10 Spuren zu schreiben, welche den vorhandenen Speicherraum möglichst vollständig ausnutzen. Je nach Wahl der Umfangsgeschwindigkeit des Kopfrades, dessen Durchmesser, der Breite des Magnetbandes und dessen Transportgeschwindigkeit ist der Versatz so gewählt, daß die einzelnen Spuren 25 stets möglichst nahe an der Bandkante beginnen und vor dieser aufhören. Weiter ist die Aufzeichnung der Spuren ohne Sicherheitsabstände zwischen den einzelnen Spuren erwünscht, um die Aufzeichnungsdichte weiter zu erhöhen. Um das Übersprechen zwischen den einzelnen Spurabschnitten möglichst zu unterdrücken, ist in dem vorliegenden Ausführungsbeispiel die Anordnung so getroffen, daß die Magnetköpfe eines Aufzeichnungskanals einen anderen Winkel des Kopfspaltes aufweisen als die des anderen Aufzeichnungskanals (Fig. 2). Infolgedessen tritt beim versehentlichen teilweisen Überstreichen eines Spurabschnittes durch einen dafür nicht vorgesehenen Magnetkopf eine starke Dämpfung der Signale aus der Nebenspur infolge der Winkelabweichung auf. Dieser Effekt ist als Azimut-Dämpfung in der Technik bekannt.

Um die Übersprechstörungen von einem Spurabschnitt zum benachbarten, also von einem Kanal zum anderen, weiter zu unterdrücken, kann die Spuranordnung so getroffen sein, daß, wie bei 27 in Fig. 2 angedeutet, die durch große Amplitudenwerte bzw. gleiche Frequenzen gekennzeichneten Synchronanteile im Signal jeweils nebeneinander liegen.

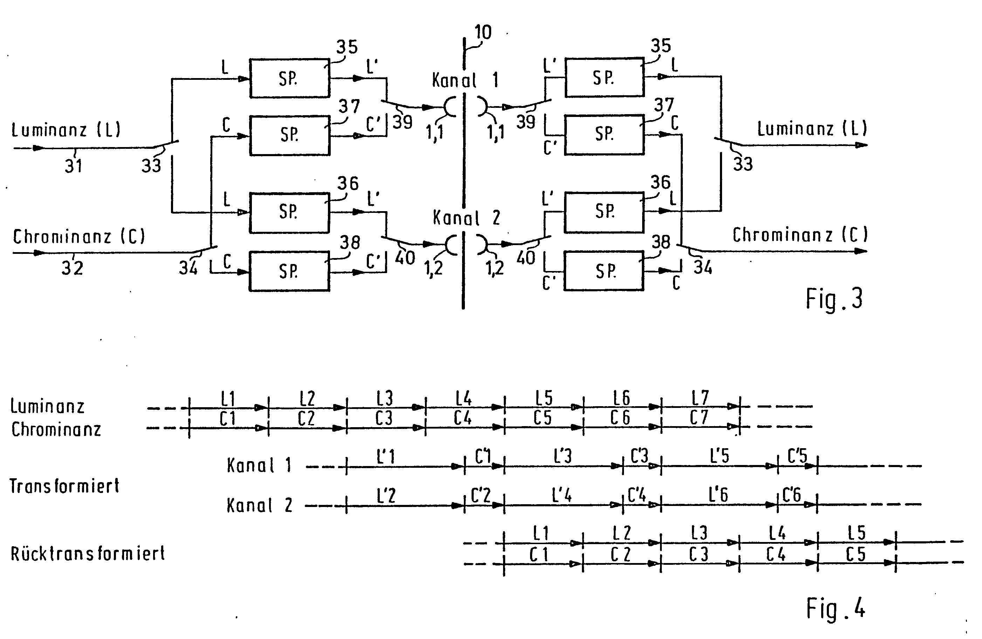

In der schematischen Darstellung des erfindungsgemäßen Aufzeichnungsverfahrens nach Fig. 3 wird das für die Aufzeichnung bestimmte FBAS-Signal nach Aufteilung mittels einer (nicht dargestellten) Filteranordnung in einen Luminanzteil (L) und einen Chrominanzteil (C) den Eingängen 31 und 32 zugeführt. Dabei wird auf den Eingang 31 das Helligkeitssignal (Luminanzsignal) L und auf den Eingang 32 das Farbartsignal (Chrominanzsignal) C gegeben. Mittels der Schalteinrichtumgen 33, 34 werden die an den Eingängen 31, 32 liegenden Signale abwechselnd auf die Speichereinrichtungen 35, 36 bzw. 37, 38 gegeben. Die Ausgänge der Speichereinrichtungen 35 und 37 liegen an je einem Umschaltkontakt einer weiteren Umschalteinrichtung 39, während die Ausgänge der Speichereinrichtungen 36, 38 an je einem Umschaltkontakt einer gleichartigen Umschalteinrichtung 40 liegen. Der Mittelpol der Umschalteinrichtung 39 ist mit der Signalspule eines ersten Magnetkopfes 1.1, der Mittelpol der Umschalteinrichtung 40 mit der Signalspule eines zweiten Magnetkopfes 1.2 verbunden. Die Magnetköpfe 1.1 und 1.2 stehen in Wirkverbindung mit der Oberfläche des Magnetbandes 41 zur magnetischen Speicherung der ihnen zugeführten elektrischen Signale.

In analoger Weise nehmen bei der Wiedergabe - wie in der rechten Hälfte der Fig. 3 dargestellt - die magnetisch wirksamen Teile der Magnetköpfe 1.1 und 1.2 die auf dem Magnetband in (unsichtbaren) Spuren gespeicherten Signale ab. Nach Umwandlung in elektrische Signale in der jedem Magnetkopf zugehörigen Signalspule werden diese über Umschalteinrichtungen 39, 40 abwechselnd auf Speichereinrichtungen gegeben. Dabei gelangen die Signale vom Magnetkopf 1.1 über die Umschalteinrichtung 39 abwechselnd zu den Speichereinrichtungen 35, 37, die vom Magnetkopf 1.2 abgenommenen Signale über die Umschalteinrichtung 40 abwechselnd zu den Speichereinrichtungen 36, 38. Die Ausgänge der Speichereinrichtungen 35, 36 liegen an je einem Umschaltkontakt der Umschalteinrichtung 33, die Ausgänge der Speichereinrichtungen 37, 38 an je einem Umschaltkontakt der Umschalteinrichtung 34. Am gemeinsamen Pol der Umschalteinrichtung 33 liegt dann ein zusammenhängendes Luminanzsignal (L), am gemeinsamen Pol der Umschalteinrichtung 34 ein zusammenhängendes Chrominanzsignal (C).

Die Speichereinrichtungen 35, 36, 37, 38 werden zum Erzielen einer einfachen Schaltungskonfiguration mit Vorteil Speicheranordnungen mit voneinander unabhängigen Einlese- und Auslese-Taktraten, beispielsweise solche vom CCD-Typ, gewählt. Ferner können die Speicheranordnungen, wie im vorliegenden Ausführungsbeispiel, den Informationsinhalt einer ganzen Fernsehzeile speichern. Das aus dem genormten FBAS-Signal ausgefilterte Luminanzsignal L wird vom Eingang 31 abwechselnd den Speichereinrichtungen 35 und 36 mittels der Umschalteinrichtung 33 zugeführt. Dabei liegt die Schaltfrequenz der Umschalteinrichtung 33 bei dem halben Wert wie die Zeilenfrequenz des aufzuzeichnenden normgerechten Farbfernsehsignals. Infolgedessen wird jeweils der Helligkeitsanteil L einer Zeile in den Speicher 35, die Helligkeitsinformation der nächstfolgenden Zeile in den Speicher 36 eingeschrieben, usw. Gleichzeitig wird mit der gleichen Schaltfrequenz die Schalteinrichtung 34 betätigt, mittels der der Chrominanzanteil C vom Eingang 32 abwechselnd auf die Speicher 37, 38 gegeben wird. Für das Auslesen der in den Speichereinrichtungen 35, 36 enthaltenen Signalabschnitte von Zeilenlänge mit der darin enthaltenen Helligkeitsinformation wird eine Taktrate gewählt, welche um den Faktor 1,5 geringer ist als die zum Einspeichern verwendete. Infolgedessen ist die Zeitdauer für den Auslesevorgang um den Faktor 1,5 länger, die einzelnen Signalabschnitte werden also gegenüber dem Einlesen zeitlich gedehnt. Für das Auslesen der in den Speichereinrichtungen 37, 38 enthaltenen Signalabschnitte von Zeilenlänge mit dem Informationsinhalt des Chrominanzsignals wird eine Taktrate gewählt, welche um den Faktor 2 größer ist als die zum Einspeichern verwendete. Infolgedessen dauert der Auslesevorgang nur die Hälfte der zum Einschreiben verwendeten Zeit, die einzelnen Signalabschnitte werden also zeitlich gestaucht. Mittels der Schalteinrichtung 39 werden abwechselnd die mit L' bezeichneten, um den Faktor 1,5 gegenüber der Originallänge zeitlich gestreckten Helligkeitssignale und die mit C' bezeichneten, zeitlich auf die Hälfte der Originallänge verkürzten Signalabschnitte mit dem Farbartsignal der Signalspule des Magnetkopfes 1.1 zugeführt und auf dem Magnetband in zusammengehörigen Spurabschnitten gespeichert. In gleicher Weise werden mittels der Umschalteinrichtung 40 die aus der Speicheranordnung 36 entnommenen zeitlich gedehnten Signalteile L' und die aus der Speicheranordnung 38 ausgelesenen Signalanteile C' zusammengefaßt und durch den Magnetkopf 1.2 in einer zweiten Folge zusammengehörigen Spurabschnitten auf dem Magnetband 41 gespeichert.

Die Faktoren für die zeitliche Dehnung bzw. Stauchung des vorbeschriebenen Ausführungsbeispiels sind willkürlich gewählt. Sie ergeben sich jedoch mit Vorteil aus der Annahme, daß der Bandbreitenbedarf für das Helligkeitssignal L zu dem Bandbreitenbedarf für das Farbartsignal C etwa im Verhältnis 3 : 1 steht. Für die Speicherung der Helligkeitsinformation L müßte also ohne Änderung der Zeitbasis ein Aufzeichnungskanal mit dem dreifachen Bandbreitenbedarf gegenüber dem Aufzeichnungskanal für das Chrominanzsignal C zur Verfügung stehen oder, wenn beide Aufzeichnungskanäle gleich ausgelegt werden, so ist der mit der Chrominanz C belegte Kanal nur zu etwa einem Drittel ausgenutzt. Durch die zeitliche Dehnung der Signalabschnitte mit der Helligkeitsinformation L geht der Bandbreitenbedarf für deren Aufzeichnung von beispielsweise 3 auf 2 MHz herunter, durch die Kompression der Signalabschnitte mit dem Farbartsignal C steigt der Bandbreitenbedarf von zuvor ca. 1 MHz ebenfalls auf 2 MHz an. Infolgedessen ist ein auf 2 MHz Bandbreite ausgelegter Aufzeichnungskanal sowohl bei der Speicherung des Helligkeitsanteils L als auch des Farbanteils C jeweils optimal ausgenutzt.

Wie bereits angedeutet, enthält die Fig. 3 nur die zur Erläuterung der grundsätzlichen Wirkungsweise notwendigen Schaltungselemente. In der schematischen Darstellung fehlen daher die in üblicher Technik vorhandenen Signalverarbeitungsschaltungen wie Verstärker, Begrenzer, ebenso sind die für die Ansteuerung der Schalteinrichtungen 33, 34, 39, 40 notwendigen Takterzeugungseinrichtungen nicht dargestellt. Deren Aufbau und Wirkungsweise liegen jedoch im Rahmen des Könnens eines Durchschnittsfachmannes auf dem Gebiet der Magnetspeichertechnik, so daß hier auf deren ausführliche Darstellung verzichtet werden kann.

In Fig. 4 sind die an den Eingängen 31 und 32 anstehenden Signalabschnitte mit L1, L2, L3..... und C1, C2, C3....... bezeichnet. Nachdem die Signale L1, L2, L3 usw. die Speichereimrichtungen 35, 36 und die Signalabschnitte C1, C2, C3 mit der Chrominanzinformation die Speicher 37, 38 durchlaufen haben und mittels der Umschalteinrichtungen 39 abwechselnd die Ausgänge der Speichereinrichtungen 35, 37 und mittels der Umschalteinrichtungen 40 die Ausgänge der Speichereinrichtungen 36, 38 mit den Signalspulen der Magnetköpfe 1.1 und 1.2 verbunden sind, ergibt sich ein zweikanaliger Signalfluß von der Form, daß in dem Kanal 1 die mit ungeraden Indizes versehenen Luminanz- und Chrominanz-Signalabschnitte enthalten sind, wobei die Signalabschnitte mit der Helligkeitsinformation L.... zum Zweck der Bandbreitenverringerung zeitlich gedehnt und die Signalabschnitte mit der Farbartinformation C... zur Erzielung höchster Speicherdichten zeitlich komprimiert sind.

In gleicher Weise werden die Ausgänge der Speichereinrichtungen 36, 38 mittels der Umschalteinrichtung 40 abwechselnd auf die Signalspule des Magnetkopfes 1.2 gegeben und so in einem zweiten Kanal in gleicher Weise abwechselnd Signalabschnitte L.... mit der Helligkeitsinformation und Signalabschnitte C... mit der Farbartinformation aufgezeichnet. Mit Vorteil ist die Anordnung der Spuren auf dem Magnetband so getroffen, daß in benachbarten Spuren die zwischen den Signalabschnitten befindlichen Grenzen einander gegenüberliegen, so daß in benachbarten Spurabschnitten ähnliche Information gespeichert werden, was den nachteiligen Einfluß des Übersprechens herabmindert. Bei der Wiedergabe werden die in den beiden parallelen Kanälen aufgezeichneten Signalabschmitte mittels geeigneter Taktansteuerungen der Speichereinrichtungen 35 bis 38 und der Umschalteinrichtungen 33, 34, 39, 40 wieder auf die Originallänge gebracht und zu zwei fortlaufenden Signalzügen L1, L2, L3.... und C1, C2, C3 zusammengefaßt. Infolge der Zeittransformation in den Speichereinrichtungen 35 bis 38 tritt nach der Wiedergabe eine Grundverzögerung auf, was bei der Bestimmung des Aufzeichnungsmusters auf dem Magnetband entsprechend zu berücksichtigen ist.

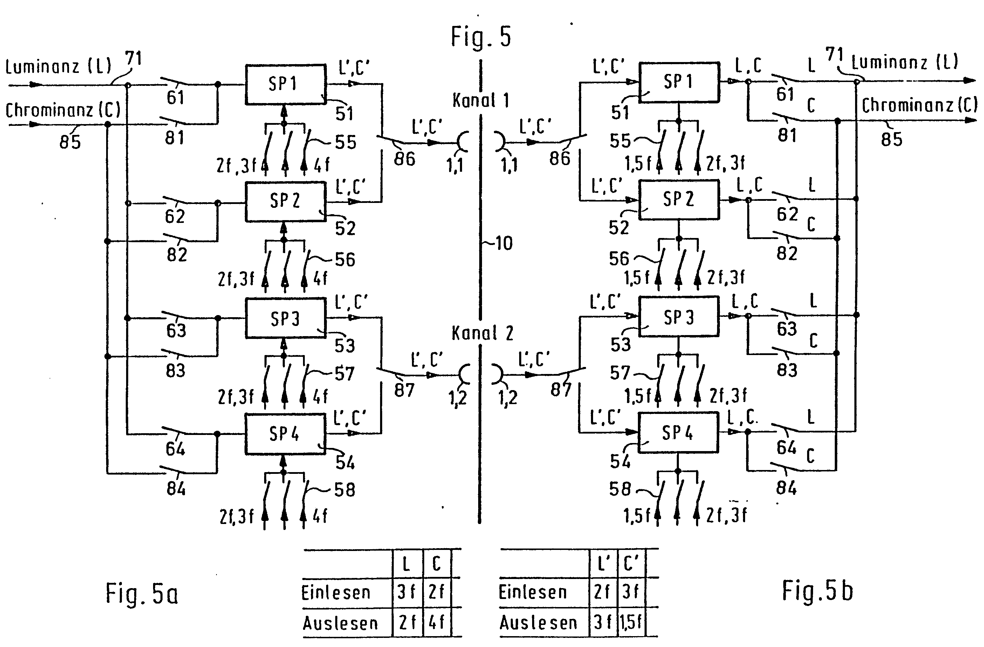

In dem Ausführungsbeispiel der Fig. 5 werden die Speicheranordnungen 51, 52, 53, 54 vom CCD-Typ (Charged coupled devices) mit unterschiedlichen Taktraten angesteuert. Dazu sind die Takteingänge der Speichereinrichtungen mittels Schalteinrichtungen 55, 56, 57, 58 mit Taktquellen verbunden, deren Taktraten im Verhältnis 2 : 3 : 4 stehen. Die Eingänge der Speichereinrichtungen 51 bis 54 sind durch je eine Schalteinrichtung 61, 62, 63, 64 mit der Leitung 71 verbunden, welche die Information der Helligkeit oder Luminanz (L) heranführt. Parallel dazu sind über gleichartige Schalteinrichtungen 81, 82, 83, 84 die Eingänge der Schalteinrichtungen 51 bis 54 mit einer zweiten Leitung 85 verbunden, welche die Farbartinformation oder Chrominanz (C) enthält. Die Ausgänge der Speichereinrichtungen 51 bis 54 sind jeweils paarweise über Umschalteinrichtungen 86, 87 mit der Signalspule jeweils eines Magnetkopfes 1.1 bzw. 1.2 verbunden.

Bei der Wiedergabe sind Ein- und Ausgänge der Speichereinrichtungen 51 bis 54 miteinander vertauscht und die Taktansteuerung an den Takteingängen erfolgt von Taktquellen, deren Taktraten im Verhältnis 1,5 : 3 stehen. Ansonsten ist die Wiedergabeanordnung streng spiegelsymmetrisch zur Aufnahme-Einrichtung, so daß die einzelnen Bauteile nicht näher erläutert werden müssen.

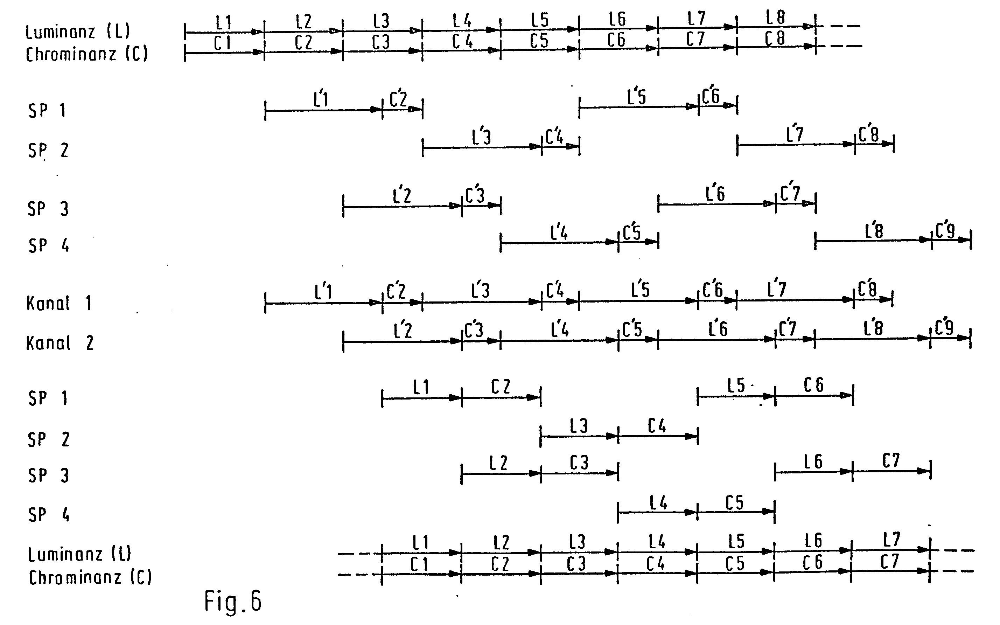

Die Wirkungsweise der Aufzeichnungs- und Wiedergabe-Einrichtung nach Fig. 5 soll im folgenden im Zusammenhang mit dem Zeitdiagramm der Fig. 6 erläutert werden. Die auf den Leitungen 71, 85 eingehenden Signalabschnitte von jeweils Zeilenlänge mit der Helligkeitsinformation (Leitung 71) bzw.

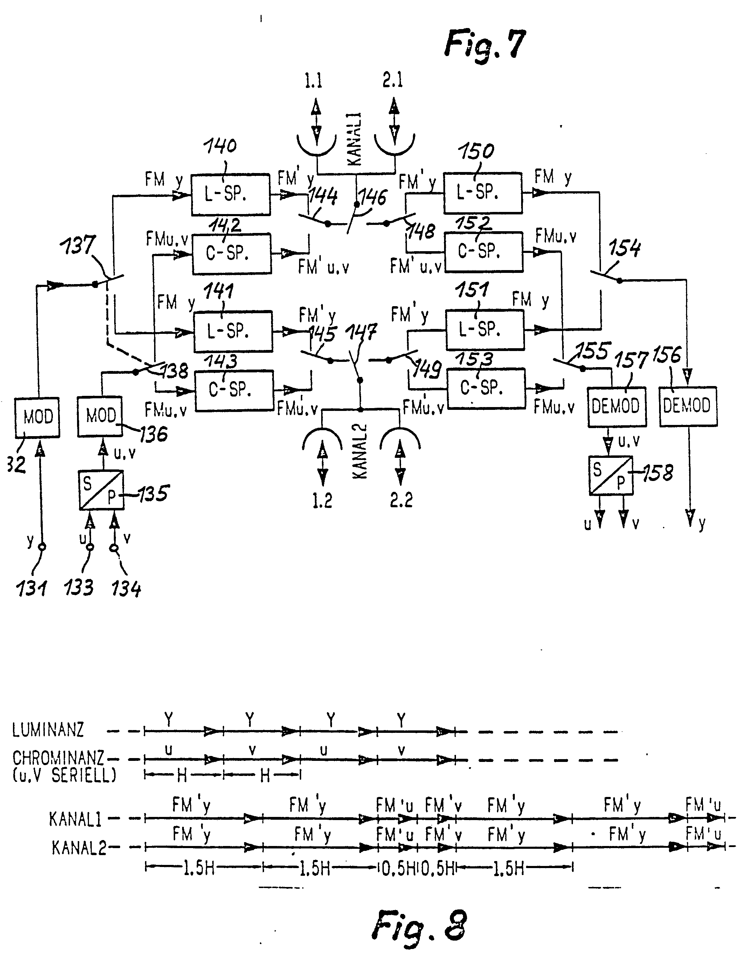

Farbartinformation (Leitung 85) sind über die Schalteinrichtungen 61, 62, 63, 64 bzw. 81, 82, 83, 84 mit den Eingängen der Speicherinrichtungen 51, 52, 53, 54 verbunden. Entsprechend den Zeilen a, b ist also in einem Kanal das Luminanzsignal L und im anderen Kanal das Chrominanzsignal C enthalten. Wird die Schalteinrichtung 61 für die Dauer einer Fernsehzeile geschlossen, so wird die Helligkeitsinformation dieser einen Fernsehzeile entsprechend Fig. 8a in die Speichereinrichtung 51 eingelesen, wenn gleichzeitig der mit 3f bezeichnete Schalter der Schalteinrichtung 55 den Takteingang der Speichereinrichtung 51 mit der Taktquelle verbindet, welche die mittlere Taktrate aus dem Taktratenverhältnis 2 : 3 : 4 liefert. Wenn das Einschreiben der Helligkeitsinformation L1 in die Speichereinrichtung 51 be endet ist, so wird der Takteingang der Speichereinrichtung 51 jetzt mit der Taktquelle verbunden, welche eine um den Faktor 0,66 niedrigere Taktrate liefert. Gleichzeitig wird die Umschalteinrichtung 88 so geschaltet, daß der Ausgang der Speichereinrichtung 51 mit dem Magnetkopf 1.1 verbunden ist. Das Auslesen der in der Speichereinrichtung 51 enthaltenen Helligkeitsinformation einer Fernsehzeile dauert nun entsprechend der niedrigeren Taktrate beim Auslesen die 1,5-fache Zeit, d.h., die Zeitbasis wird gestreckt, der Bandbreitenbedarf zur Speicherung herabgesetzt.

Wie aus dem Taktschema der Fig. 5a zu erkennen ist, erfolgt das Einschreiben der Chrominanzinformation einer jeden Zeile mit der gleichen Taktrate, mit welcher das Auslesen der Luminanzinformation aus der Speichereinrichtung erfolgt. Bei Anwendung des Schieberegisterprinzips ist es daher möglich, gleichzeitig mit dem Auslesen eine andere Information in die Speichereinrichtung einzuschreiben, sofern dies mit der gleichen Taktrate erfolgen soll. Infolgedessen ist es möglich, durch Schließen des Schalters 81 und Öffnen des Schalters 80 gleichzeitig mit dem Auslesen der Helligkeitsinformation L'1 aus dem Speicher 51 die Chrominanzinformation C in diesen Speicher einzuschreiben (Fig. 6c). Dabei wird zwar ein Teil des Signalabschnittes C3 (Fig. 6b) mit in den Speicher eingeschrieben, jedoch ist dieser Umstand ohne Nachteil, da beim nachfolgenden Auslesen die überzählige Information durch entsprechende Taktumschaltung unterdrückt wird. In entsprechender Weise werden die Signalabschnittspaare L'2/C'3, L'3/C'4, L'4/C'5..... entsprechend dem Zeitschema der Fig. 8c bis f aus den beiden Signalzügen L2, L3, L4..... und C3, C4, C5.... (Fig. 6a, b) gewonnen und durch entsprechende Umschaltung der Schalteinrichtungen 86, 87 zu zwei fortlaufenden Signalzügen mit gleichem Bandbreitebedarf für Luminanz- und Chrominanzinformation zusammengefügt (Fig. 6g, h). Diese beiden Signalzüge werden durch die beiden Magnetköpfe 1.1 und 1.2 auf das Magnetband 10 aufgezeichnet.

Der Wiedergabebetrieb erfolgt mit einer reziproken Zeittransformation der auf dem Magnetband 10 gespeicherten Signalabschnitte. Dies wird durch eine entsprechende Taktansteuerung der Speichereinrichtungen 51 bis 54 erreicht. So wird entsprechend Fig. 8g zunächst der Signalabschnitt L'1 mit der Luminanzinformation in die Speichereinrichtung 51 eingelesen, nach dem die Umschalteinrichtung 86 den Speichereingang mit der Signalspule des Magnetkopfes 1.1 verbunden hat. Dabei ist die Einlesetaktrate mit 2f gekennzeichnet, sie ist also genau so groß wie die Auslesetaktrate beim Aufzeichnungsvorgang. Wenn die gesamte Information L'1 im Speicher 51 enthalten ist, wird ihr Takteingang mit der Taktquelle mit der Taktrate 3f verbunden, so daß der nachfolgende Auslesevorgang mit einer dem gegenüber dem Einschreiben 1,5-fachen Geschwindigkeit erfolgt. Der Signalabschnitt erscheint daher am Ausgang der Speichereinrichtung 51 in der ursprünglichen Länge L1 (Fig. 6i).Gleichzeitig mit dem Auslesen der Luminanzinformation wird die auf dem Magnetband in der gleichen Spur nachfolgend aufgezeichnete Chrominanzinformation C'2 mit der gleichen Taktrate in den Speicher eingeschrieben. Nach dem Einschreiben wird der Takteingang der Speichereinrichtung 51 erneut umgeschaltet und die in ihm enthaltene Chrominanzinformation mit einer gegenüber dem Einschreiben um die Hälfte verminderten Taktrate ausgelesen und damit wieder auf die Ursprungslänge C2 gebracht (Fig. 6i). Durch entsprechende Umschaltung der Schalteinrichtungen 61, 81 werden die am Ausgang der Speichereinrichtung 51 nacheinander anstehenden Signalabschnitte mit abwechselnder Luminanz- und Chrominanzinformation auf die Leitungen 71 bzw. 85 in der Weise verteilt, daß die Leitung 71 die fortlaufende Luminanz- und die Leitung 85 die fortlaufende Chrominanzinformation enthält. Zu diesem Zweck sind weiterhin die Ausgänge der Speichereinrichtungen 52 bis 54 in gleicher Weise parallel mit den Leitungen 71 bzw. 85 verbindbar. Nach dem Zusammensetzen der Signalabschnitte L1/C2, L2/C3, L3/C4,...... (Fig. 8i bis m) zu den beiden Signalzügen mit der Luminanzinformation (L1, L2, L3,....) bzw. Chrominanzinformation C1, C2, C3,....(Fig. 6n), ist der Speichervorgang abgeschlossen.

In der schematischen Darstellung der Schaltungsanordnung zur Durchführung des erfindungsgemäßen Aufzeichnungsverfahrens gemäß Fig. 7 werden die für die Aufzeichnung bestimmten Farbvideosignalkomponenten Y, U und V für die Aufzeichnung gemäß der Erfindung aufbereitet. Dabei wird das Helligkeitssignal (Luminanz Y) dem Eingang 131 eines Modulators 132 zugeführt. Im Modulator 132 wird die Helligkeitskomponente Y bandbreitenbegrenzt einer Trägerfrequenz aufmoduliert. Das Farbdifferenzsignal U wird dem Eingang 133, das zeitlich dazu parallel anstehende zweite Farbdifferenzsignal V dem Eingang 134 eines Parallel-Serien-Wandlers 135 zugeleitet. Dabei wird gleichzeitig abwechselnd jede zweite Farbinformation U bzw. V unterdrückt, so daß am Ausgang des Parallel-Serien-Wandlers die beiden Farbdifferenzsignale U und V seriell abzugreifen sind. Diese serielle Signalfolge wird im Modulator 136 einer zweiten Trägerfrequenz mit wesentlich niedriger Frequenzlage als im Falle der Trägerfrequenz für das Luminanzsignal aufmoduliert. Mittels der Schalteinrichtungen 137, 138, deren Schaltfrequenz bei einem Viertel der Zeilenfrequenz liegt, werden die geträgerten Signalkomponenten abwechselnd auf die Speichereinrichtungen 140 und 141 bzw. 142, 143 gegeben. Die Ausgänge der Speichereinrichtungen 140 und 141 liegen an je einem Umschaltkontakt einer weiteren Umschalteinrichtung 144, während die Ausgänge der Speichereinrichtungen 141 und 143 an je einem Umschaltkontakt einer gleichartigen Umschalteinrichtung 145 liegen. Der Mittelpol der Umschalteinrichtumg 144 ist während der Aufzeichnung über den Kontakt 148 des Aufnahme-/Wiedergabe-Wahlschalters mit den Signalspulen der dem gleichen Aufzeichnungskanal zugehörenden Magnetwandler 1.1 und 2.1 verbunden. In gleicher Weise ist der Mittelpol der Umschalteinrichtung 145 über den Kontakt 147 des Aufnahme-/Wiedergabe-Wahlschalters mit den Signalspulen der dem zweiten Aufzeichnungskanal zugehörenden Magnetwandler 1.2 und 2.2 verbunden. Die Magnetwandler 1.1, 1.2, 2.1 und 2.2 stehen in Wirkverbindung mit der Oberfläche des Magnetbandes 10 zur magnetischen Speicherung der ihnen zugeführten elektrischen Signale.

In analoger Weise nehmen bei der Wiedergabe - wie in der rechten Hälfte der Fig. 7 dargestellt - die magnetisch wirksamen Teile der Magnetwandler 1.1, 1.2, 2.1 und 2.2 die auf dem Magnetband in (unsichtbaren) Spuren gespeicherten Signale ab. Nach Umwandlung in elektrische Signale in der jedem Magnetkopf zugehörigen Signalspule werden diese elektrischen Signale über die Umschalteinrichtungen 146, 147, die bei der Wiedergabe die andere - nicht gezeichnete - Schaltstellung einnehmen, über die Umschalteinrichtungen 148, 149 abwechselnd auf die Speichereinrichtungen 150, 151, 152 und 153 gegeben. Dabei gelangen die abwechselnd von den Magnetköpfen 1.1 und 2.1 des ersten Aufzeichnungskanals gelieferten Signale abwechselnd zu Speichereinrichtungen 150 und 152, die von den Magnetköpfen 1.2 und 2.2 des zweiten Aufzeichnungskanals gelieferten Signale abwechselnd zu den Speichereinrichtungen 151 und 153. Die Ausgänge der Speichereinrichtungen 150, 151 liegen an je einem Umschaltkontakt der Umschalteinrichtung 154, die Ausgänge der Speichereinrichtungen 152, 153 an je einem Umschaltkontakt der Umschalteinrichtung 155. Am Mittelpol der Umschalteinrichtung 154 liegt dann ein zusammenhängendes geträgertes Helligkeitssignal $FM_Y$, das im Demodulator 156 demoduliert wird und das Helligkeitssignal Y ergibt. Am Mittelpol der Schalteinrichtung 155 liegen abwechselnd die geträgerten Farbdifferenzsignale $FM_U$ und $FM_V$ an. Nach Demodulation im Demodulator 157 ergeben sich die Farbdifferenzsignale U und V in serieller Darstellung. Nach Serien-Parallel-Wandlung im Serien-Parallel-Wandler 158 stehen an dessen Ausgang die beiden Farbdifferenzsignale U und V zur Verfügung.

Für die Speichereinrichtungen 140 bis 143 und 150 bis 153 werden zum Erzielen einer einfachen Schaltungskonfiguration mit Vorteil Speicheranordnung mit voneinander unabhängigen Einlese- und Auslese-Taktraten, beispielsweise solche vom CCD-Typ, gewählt. Ferner können die Speicheranordnungen, wie im vorliegenden Ausführungsbeispiel, den Informationsinhalt zweier ganzer Fernsehzeilen speichern.

Die Wirkungsweise der Aufzeichnungs- und Wiedergabe-Einrichtung nach Fig. 7 soll im folgenden im Zusammenhang mit dem Zeitdiagramm der Fig. 8 erläutert werden. Die Helligkeitskomponente Y des Farbbildsignalgemisches wird vom Eingang 131 dem Modulator 132 zugeführt und darin einer Trägerfrequenz aufmoduliert. Die Chrominanzkomponenten U und V von den Eingängen 133 und 134 werden zunächst im Parallel-Serien-Wandler 135 aus der parallelen in die serielle Form gebracht und so im Modulator 136 einer zweiten Trägerfrequenz aufmoduliert. Dabei kann beispielsweise die Trägerfrequenz für das breitbandige Helligkeitssignal Y bei 4 MHz, die Trägerfrequenz für die seriell vorliegenden Farbkomponenten U und V bei 1,5 MHz liegen. Das geträgerte Luminanzsignal $FM_Y$ wird vom Ausgang des Modulators 132 mittels der Schalteinrichtung 137 abwechselnd den Speichereinrichtungen 140 und 141 zugeführt. Dabei liegt die Schaltfrequenz der Umschalteinrichtung 137 bei einem Viertel der Zeilenfrequenz des aufzuzeichnenden normgerechten Farbfernsehsignals. Infolgedessen werden jeweils die Helligkeitskomponenten Y zweier aufeinanderfolgender Zeilen in den Speicher 140, die Helligkeitskomponenten der nächstfolgenden beiden Zeilen in den Speicher 141 eingeschrieben, usw. Gleichzeitig wird mit der gleichen Schaltfrequenz die Schalteinrichtung 138 betätigt, mittels der die seriellen geträgerten Farbkomponenten $FM_U$ und $FM_V$ vom Ausgang des Modulators 136 paarweise abwechselnd auf die Speicher 142, 143 gegeben werden. Für das Auslesen der in den Speichereinrichtungen 140, 141 enthaltenen Signalabschnitte mit der Helligkeitsinformation einer Zeilenlänge wird eine Taktrate gewählt, welche um den Faktor 1,5 geringer ist als die zum Einschreiben verwendete. Infolgedessen ist die Zeitdauer für den Auslesevorgang um den Faktor 1,5 länger die einzelnen Signalabschnitte $FM_Y$ werden also gegenüber dem Einlesen zeitlich gedehnt. Für das Auslesen der in den Speichereinrichtungen 142, 143 enthaltenen Signalabschnitte von Zeilenlänge mit dem Informationsin halt der Farbdifferenzsignale wird eine Taktrate gewählt, welche um den Faktor 2 größer ist als die zum Einspeichern verwendete. Infolgedessen dauert der Auslesevorgang nur die Hälfte der zum Einschreiben verwendeten Zeit, die einzelnen Signalabschnitte werden also zeitkomprimiert. Mittels der Schalteinrichtung 144 am Ausgang der Speichereinrichtungen 140 und 142 werden abwechselnd die mit $FM_Y$ bezeichneten, um den Faktor 1,5 gegenüber der Originallänge zeitlich gestreckten, Helligkeitssignale aus der Speichereinrichtung 140 und die mit $FM'_U$ und $FM'_V$ bezeichneten, seriellen, zeitlich auf die Hälfte der Originallänge verkürzten Abschnitte mit den Farbdifferenzsignalen vom Ausgang der Speichereinrichtung 142 den Signalspulen der Magnetköpfe 1.1 und 2.1 zugeführt und als fortlaufende Signalfolge auf dem Magnetband in aufeinanderfolgenden Spurabschnitten eines Aufzeichnungskanals gespeichert. In gleicher Weise werden mittels der Umschalteinrichtung 145 die aus der Speicheranordnung 141 entnommenen, zeitlich gedehnten Signalteile $FM'_Y$ und die aus der Speicheranordnung 143 ausgelesenen Farbdifferenzsignalanteile $FM'_U$ und $FM'_V$ zusammengefaßt und durch die Magnetköpfe 1.2 und 2.2 in einer weiteren Folge von zusammengehörigen Spurabschnitten eines zweiten Aufzeichnungskanals auf dem Magnetband 10 gespeichert.

Die für die zeitliche Kompression bzw. Expansion des vorbeschriebenen Ausführungsbeispiels angegebenen Faktoren sind willkürlich gewählt. Sie ergeben sich jedoch mit Vorteil aus der Annahme, daß der Bandbreitenbedarf für das Luminanzsignal Y zu dem Bandbreitenbedarf für jedes Farbdifferenzsignal etwa im Verhältnis 3 : 1 steht. Für die Speicherung der Helligkeitskomponente Y müßte also ohne Änderung der Zeitbasis ein Aufzeichnungskanal mit dem dreifachen Bandbreitenbedarf gegenüber dem Aufzeichnungskanal für die Farbkomponenten U und V zur Verfügung stehen oder, wenn beide Aufzeichnungskanäle gleich ausgelegt sind, so ist der mit den Farbdifferenzsignalen U und V belegte Kanal nur zu etwa 1/3 ausgenutzt. Durch zeitliche Dehnung der Signalabschnitte mit der Helligkeitskomponente Y geht der Bandbreitenbedarf für deren Aufzeichnung im gewählten Beispiel von 4 MHz auf 2,88 MHz herunter, durch die Kompression der Signalabschnitte mit den geträgerten Farbdifferenzsignalen $FM_U$ und $FM_V$ steigt der Bandbreitenbedarf von zuvor ca. 1,5 MHz ebenfalls auf 2,66 MHz an. Infolgedessen ist ein auf ein 2,66 MHz Bandbreite ausgelegter Aufzeichnungskanal sowohl bei der Speicherung des geträgerten, zeitgedehnten Helligkeitssignals Y als auch derseriell vorliegenden, geträgerten Farbdifferenzsignale U und V jeweils optimal ausgenutzt.

Wie bereits angedeutet, enthält die Fig. 7 nur die zur Erläuterung der grundsätzlichen Wirkungsweise notwendigen Schaltungselemente. In der schematischen Darstellung fehlen daher die in üblicher Technik vorhandenen Signalverarbeitungsschaltungen, wie Verstärker, Begrenzer; ebenso sind die für die Ansteuerung der Schalteinrichtungen 137, 138, 144, 145 notwendigen Takterzeugungseinrichtungen nicht dargestellt. Deren Aufbau und Wirkungsweise liegen jedoch im Rahmen des Könnens eines Durchschnittsfachmannes auf dem Gebiet er Magnetspeichertechnik, so daß hier auf die ausführliche Darstellung dieser Schaltungen verzichtet werden kann.

In Fig. 8 sind die am Eingang 131 (Fig. 7) anstehenden Signalabschnitte mit der Luminanzkomponente mit Y, das am Eingang 133 vorliegende Farbdifferenzsignal B-Y mit U und das am Eingang 134 vorliegende zweite Farbdifferenzsignal R-Y mit V bezeichnet. Nach der Parallel-Serien-Wandlung liegen die Farbdifferenzsignale U und V abwechselnd am Eingang des Modulators 136. Mit H ist die Länge einer Norm-Fernsehzeile bezeichnet. In den Speichereinrichtungen 140, 141 werden die Signaläbschnitte mit der Helligkeitskomponente Y um den Faktor 1,5 gestreckt, so daß von den beiden Magnetköpfen 1.1 und 2.1 zwei Zeilen mit dem geträgerten Helligkeitssignal $FM'_Y$ aufgezeichnet werden, bevor die Umschalteinrichtung 144 den Ausgang der Speichereinrichtung 142 mit den beiden o.g. Magnetköpfen verbindet, worauf die beiden zeitkomprimierten geträgerten Farbdifferenzsignalabschnitte $FM'_U$ und $FM'_V$ im Anschluß an die beiden Signalabschnitte mit der Helligkeitskomponente aufgezeichnet werden. Damit ist eine Sequenz in Kanal 1 beendet. In gleicher Weise werden im zweiten Aufzeichnungskanal ebenfalls nacheinander zwei Signalabschnitte mit der Helligkeitskomponente und daran anschließend die zugehörigen zeitkomprimierten Signalabschnitte mit den Farbdifferenzsignalen aufgezeichnet. Es ergibt sich somit ein zweikanaliger Signalfluß in der Form, daß in dem Kanal 1 beispielsweise die mit den Indizes 1 und 2 versehenen Signalabschnitte mit der Helligkeitskomponente Y, daran anschließend die beiden Signalabschnitte mit der Information der zugehörigen Farbdifferenzsignale, daran anschließend unter Auslassung der Signalabschnitte mit den Indizes 3 und 4 die Signalabschnitte mit der Helligkeitskomponente Y und den Indizes 5 und 8 mit anschließenden Farbdifferenzsignalen mit den Indizes 5 und 8 usw. aufgezeichnet werden. In ähnlicher Weise enthält der Kanal 2 die Signalkomponenten mit den Indizes 3, 4, 7, 8 usw.

Nach einem anderen Ausführungsbeispiel kann die Trägerfrequenz das Helligkeitssignal Y bei 4,5 MHz und die Trägerfrequenz für die seriell vorliegenden Farbdifferenzsignale bei 1,5 MHz liegen. Nach einer Reduzierung der Bandbreite für die Aufzeichnung des Y-Signals auf 3 MHz und einer Halbierung der Aufzeichnungslänge für die Farbdifferenzsignale, was einer Verdopplung des Bandbreitenbedarfs von 1,5 MHz auf 3 MHz entspricht, können beide Signalabschnitte mit nunmehr gleichem Bandbreitenbedarf in einem Kanal fortlaufend aufgezeichnet werden.

Mit Vorteil ist die Anordnung der Spuren auf dem Magnetband so getroffen, daß in benachbarten Spuren Signalabschnitte mit ähnlichem Bildinhalt einander gegenüber liegen, so daß der nachteilige Einfluß des Übersprechens herabgemindert ist. So liegen mit Vorteil die Signalabschnitte mit den Helligkeitskomponenten und den Indizes 1 und 2 neben den Helligkeitskomponenten mit den Indizes 3 und 4 nebeneinander, ebenso wie anschließend die Signalabschnitte mit den Farbdifferenzsignalen und den Indizes 1 und 2 neben den Farbdifferenzsignalen mit den Indizes 3 und 4 liegen. Dabei liegt ein Signalabschnitt mit dem Inhalt des Farbdifferenzsignals U der ersten Zeile neben dem Signalabschnitt mit dem Farbdifferenzsignal U der dritten Zeile. Ebenso liegt ein Signalabschnitt mit dem Farbdifferenzsignal V der zweiten Zeile neben dem Signalabschnitt V der vierten Zeile. Bei der Wiedergabe werden die in den beiden parallelen Kanälen aufgezeichneten Signalabschnitte mittels geeigneter Taktansteuerungen der Speichereinrichtungen 150, 151 und 152, 153 wieder auf die Originallänge gebracht und zwei fortlaufenden Signalzügen Y, Y, Y.... und U, V, U, V.....zusammengefaßt. Infolge der Zeittransformation in den Speichereinrichtungen tritt nach der Wiedergabe eine Grundverzögerung auf, was bei der Bestimmung des Aufzeichnungsmusters auf dem Magnetband entsprechend zu berücksichtigen ist.

**Patentansprüche**

1. Verfahren zum Aufzeichnen und/oder Wiedergeben von breitbandigen Signalen, insbesondere von Farbvideosignalen, wobei die Signale bei der Aufzeichnung einer Signalaufspaltung in eine Komponente mit größerem und eine solche mit geringerem Bandbreitenbedarf sowie außerdem einer zeitlichen Unterteilung in Abschnitte bestimmter Länge unterworfen werden, dadurch gekennzeichnet, daß beide Arten von Signalabschnitten gegensätzlichen Zeitbasisänderungen unterworfen werden, wobei die Abschnitte größeren Bandbreitenbedarfs zeitlich gedehnt und die Signalabschnitte geringeren Bandbreitenbedarfs zeitlich gestaucht werden und daß die in der Zeitbasis geänderten Signalabschnitte zyklisch abwechselnd in wenigstens zwei örtlich voneinander getrennten Kanälen eines magnetischen Speichers aufgezeichnet werden derart, daß in jedem der Kanäle eine zeitliche überlappung von Signalabschnitten vermieden wird, und daß die mehrkanalig aufgezeichneten Signale bei der Wiedergabe durch reziproke Zeitbasisänderung in die ursprüngliche Frequenzlage rückumgesetzt und zu einem dem ursprünglichen Signal entsprechenden Signal zusammengesetzt werden.

2. Verfahren nach Anspruch 1, dadurch gekennzeichnet, daß das in einen Helligkeits- und einen Farbanteil aufgespaltene Farbvideosignal Speichereinrichtungen zugeführt wird, denen beim Einlesen bzw. Auslesen Taktsignale unterschiedlicher Frequenz zugeführt werden und daß die Ausgänge der Speichereinrichtungen für die Zeitbasisänderung der Signalabschnitte mit der Luminanzinformation und die Speichereinrichtungen für die Zeitbasisänderung der Signalabschnitte mit der Chrominanzinformation abwechselnd auf wenigstens zwei Magnetwandlereinrichtungen geschaltet werden und die Gesamtinformation wenigstens in zwei Kanälen magnetisch gespeichert wird.

3. Verfahren nach Anspruch 1 oder 2,dadurch gekennzeichnet, daß die Signalabschnitte der einen Art das Helligkeitssignal Y darstellen, das einer ersten Trägerfrequenz aufmoduliert wird, daß die Signalabschnitte der zweiten Art die Farbdifferenzsignale U und V darstellen, die bei der Aufzeichnung zunächst aus der parallelen Form in die serielle gebracht und so einer zweiten Trägerfrequenz aufmoduliert werden, daß die geträgerten Signalabschnitte mit dem Inhalt des Helligkeitssignals Y nach jedem zweiten Signalabschnitt abwechselnd in Speichereinrichtungen eingeschrieben und aus diesen zeittransformiert im Sinne einer Bandbreitenreduktion ausgelesen werden, daß die geträgerten seriellen Signalabschnitte mit dem Inhalt der beiden Farbdifferenzsignale U und V ebenfalls nach jedem zweiten Signalabschnitt abwechselnd in Speichereinrichtungen eingelesen und an diesem zeittransformiert im Sinne einer Bandbreitenerhöhung ausgelesen werden und daß der Inhalt einer Speichereinrichtung für das Helligkeitssignal und der Inhalt einer Speichereinrichtung für die Farbdifferenzsignale abwechselnd mit den Aufzeichnungsanordnungen eines Aufzeichnungskanals und der Inhalt einer zweiten Speichereinrichtung für das Helligkeitssignal Y und einer zweiten Speichereinrichtung für die Farbdifferenzsignale abwechselnd mit den Aufzeichnungsanordnungen des zweiten Aufzeichnungskanals verbunden werden und daß bei der Wiedergabe die Signalabschnitte beider Arten durch reziproke Zeittransformationen und die ursprüngliche Trägerfrequenzlage rückumgesetzt und die Signalabschnitte jeder Art zu einem zusammenhängenden Signalstrom zusammengefaßt und demoduliert werden.

4. Verfahren nach Anspruch 3, dadurch gekennzeichnet, daß sich die Trägerfrequenzlagen für die Signalabschnitte beider Arten wie 3 : 1 verhalten.

5. Verfahren nach Anspruch 3 oder 4, dadurch gekennzeichnet, daß die geträgerten Signalabschnitte der ersten Art durch Zeittransformationen auf einen um den Faktor 1,5 verringerten Bandbreitenbedarf gebracht und die Signalabschnitte der zweiten Art durch eine zweite Zeittransformation auf einen um den Faktor 2 erhöhten Bandbreitenbedarf gebracht werden.

6. Verfahren nach einem der vorhergehenden Ansprüche, dadurch gekennzeichnet, daß in nebeneinan derliegenden annähernd gleichzeitig aufgezeichneten Signalspuren jeweils die zeittransformierten Signalabschnitte der einen oder der anderen Art niedergelegt werden

7. Verfahren nach Anspruch 6, dadurch gekennzeichnet, daß die Signalabschnitte mit dem Inhalt des Farbdifferenzsignals U und die mit dem des Farbdifferenzsignals V jeweils in zwei Kanälen nebeneinanderliegend aufgezeichnet werden.

8. Verfahren zum Aufzeichnen und/oder Wiedergeben von Farbvideosignalen, bei welchem die Farbvideosignale bei der Aufzeichnung in eine Helligkeits- und in eine Farbartinformation aufgespalten werden und bei welchem die aufgespalten Informationen einer zeitlichen Ünterteilung in Signalabschnitte bestimmter Länge unterworfen werden, dadurch gekennzeichnet, daß aufzeichnungsseitig mehreren Speichereinrichtungen (35 bis 38; 51 bis 54; 140 bis 143) über erste Schalteinrichtungen (33 und 34; 61 bis 64; 81 bis 84; 137 und 138) abwechselnd oder zyklisch Signalabschnitte der Helligkeits- und der Farbartinformation zugeführt und Ausgangssignale der Speichereinrichtungen (35 bis 38; 51 bis 54; 140 bis 143) über zweite Schalteinrichtungen (39 und 40; 86 und 87; 144 und 145) zu wenigstens zwei Magnetwandlern (1.1, 1.2) zum Aufzeichnen weitergeleitet werden und daß wiedergabeseitig Signale, welche von den Magnetwandlern (1.1, 1.2) erhalten werden, über die zweiten Schalteinrichtungen (39 und 40; 86 und 87; 144 und 145) den Speichereinrichtungen (35 bis 38; 51 bis 54; 140 bis 143) zugeführt werden und von Ausgangssignalen der Speichereinrichtungen (35 bis 38; 57 bis 54; 140 bis 143) mit den ersten Schalteinrichtungen (33 und 34; 61 bis 64; 81 bis 84; 137 und 138) die ursprüngliche Helligkeitsinformation und die Farbinformation abgeleitet wird.

9. Verfahren nach Anspruch 8, dadurch gekennzeichnet, daß Taktsignale einer Reihe von Taktsignalquellen über dritte Schalteinrichtungen (55 bis 58) Takteingängen der Speichereinrichtungen (51 bis 54) zugeführt werden.

10. Verfahren nach Anspruch 9, dadurch gekennzeichnet, daß die Taktraten der Taktsignale aufnahmeseitig im Verhältnis 2 : 3 : 4 und wiedergabeseitig im Verhältnis 1,5 : 2 : 3 verkoppelt werden.

## Claims

1. Method for recording and/or reproducing broadband signals, particularly colour video signals, in which the a component with a larger and a component with a smaller broadband requirement, as well as a time subdivision into types of signal portions are subjected to opposite time based changes, the portions with the larger broadband requirement being time expanded and the signal portions with the the signals portions modified in the time base are cyclically alternately recorded in at least two spatially separated channels of a magnetic memory, in such a way that in each avoided and that the multichannel recorded signals during reproduction are reconverted into the original frequency position by reciprocal time base change and combined into a signal corresponding to the original signal.

2. Method according to claim 1, characterized in that the colour video signals split up into a chrominance and during reading in or out, are supplied clock signals of different frequencies and that the outputs of the storage means for the time base change of the signals portions with time base change of the signal portions with the chrominance information are alternately switched to at least two magnetic converter means and the total information is magnetically stored in at least two channels.

3. Method according to claims 1 or 2, characterized in that the signal portions of one type represent the luminance signal Y on which is modulated a first carrier frequency, that the signal portions of the second type represent the chrominance signals U and V which, during recording, are firstly brought from the parallel form into the serial form and in this way a second carrier frequency is modulated on, that the carried signal portions with the content of the luminance signal Y, following each second signal portion are alternately written into the storage means and read out therefrom in timetransformed manner in the sense of a broadband reduction, that the carried serial signal portion with the content of the two chrominance signals U and V are also alternately read into the storage means after every second signal portion and at same are read out in timetransformed manner in the sense of a broadband increase and that the content of a storage means for the luminance signal and the content of a storage means for the chrominance signal are alternately connected to the recording arrangements of a recording channel and the content of a second storage means for the luminance signal Y and a second storage means for the chrominance signals are alternately connected to the recording arrangements of the second recording channel and that on reproduction the signal portions of both types are reconverted by reciprocal time transformations to the original carrier frequency position and the signal portions of each type are combined to a cohesive signal current and demodulated.

4. Method according to claim 3, characterized in that the carrier frequency positions for the signal portions of both types behave in the ratio 3: 1.

5. Method according to claims 3 or 4, characterized in that the carried signal portions of the first type are brought by time transformations to a broadband requirement reduced by a factor of 1.5 and the signal portions of the second type are brought by a second time transformation to a broadband requirement increased by a factor of 2.

6. Method according to one of the preceeding claims, characterized in that in each case the time transformed signal portions of one or other type are placed in juxtaposed, approximately simultaneously recorded signal tracks.

7. Method according to claim 6, characterized in that the signal portions with the content of the chrominance signal U and those with the content of the chrominance signal V are in each case recorded in juxtaposed manner in two channels.

8. Method for recording and/or reproducing colour video signals, in which the colour video signals during recording are split up into a chrominance and a luminance information and in which the split up informations are subject to a time subdivision into signal portions of a specific length, characterized in that on the recording side signal portions of the chrominance and luminance information are alternately or cyclically supplied to several storage means (35 to 38; 51 to 54; 140 to 143) via first switching means (33, 34; 61 to 64; 81 to 84; 137, 138) and output signals of the storage means (35 to 38; 51 to 54; 140 to 143) are supplied via second switching means (39, 40; 86, 87; 144, 145) to at least two magnetic recorders (1.1, 1.2) for recording purposes and that on the reproduction side signals obtained from the magnetic converters (1.1, 1.2) are supplied via second switching means (39, 40; 86, 87; 144, 145) to the storage means (35 to 38; 51 to 54; 140 to 143) and the original chrominance and luminance informations are derived from the output signal of the storage means (35 to 38; 51 to 54; 140 to 143) with the first switching means (33, 34; 61 to 64; 81 to 84; 137, 138).

9. Method according to claim 8, characterized in that clock signals of a plurality of clock signal sources are supplied via third switching means (55 to 58) to the clock inputs of the storage means (51 to 54).

10. Method according to claim 9, characterized in that the clock rates of the clock signals are coupled in the ratio 2 : 3 : 4 on the recording side and in the ratio 1.5 : 2 : 3 on the reproduction side.

## Revendications

1. Procédé d'enregistrement et/ou restitution de signaux à large bande, en particulier des signaux vidéo couleur, dans lequel les signaux sont soumis, lors de l'enregistrement, à un éclatement de signal en une composante à plus grande largeur de bande nécessaire et une autre avec une largeur de bande nécessaire plus faible, ainsi également qu'à une division dans le temps en segments de longueur déterminée, caractérisé en ce que les deux types de segment de signal sont soumis à des modifications opposées de base de temps, les segments de plus grande largeur de bande nécessaire étant dilatés dans le temps et les segments de signal de plus faible largeur de bande nécessaire étant comprimés dans le temps, et que les segments de signal modifiés dans la base de temps sont enregistrés alternativement et cycliquement au dans moins deux canaux séparés matériellement, de sorte que dans chacun des canaux un recouvrement dans le temps des segments de signal soit évité, et que les signaux enregistrés dans plusieurs canaux sont lors de la restitution rétablis dans leur position de fréquence originelle par une modification réciproque de la base de temps, et composés en un signal correspondant au signal d'origine.

2. Procédé suivant la revendication 1, caractérisé en ce que le signal vidéo couleur éclaté en une composante de luminance et une composante de couleur est envoyé à des dispositifs de mémorisation auxquels sont envoyés pour la mise en mémoire et la lecture respectivement des signaux d'horloge d'une fréquence différente, et que les sorties des mémoires pour la modification de la base de temps des segments de signal avec l'information de luminance et les mémoires pour la modification de la base de temps des segments de signal avec l'information de chrominance sont branchées alternativement sur au moins deux dispositifs de conversion magnétique et que l'information globale est mémorisée magnétiquement dans au moins deux canaux.

3. Dispositif suivant la revendication 1 ou 2, caractérisé en ce que les segments de signal d'un premier type représentent le signal de luminance (Y) qui est modulé sur une fréquence porteuse, que les segments de signal du deuxième type représentent les signaux de différence de couleur (U et V) qui sont pour l'enregistrement d'abord amenés de la forme parallèle à la forme série et ainsi modulés sur une deuxième fréquence porteuse, que les segments de signal portés avec le contenu du signal de luminance (Y) sont inscrits après chaque deuxième segment de signal alternativement dans des dispositifs de mémorisation et sont lus dans ceux-ci après transformation de temps dans le sens d'une réduction de la largeur de bande, que les segments de signal en série portés, avec le contenu des deux signaux de différence de couleur (U et V), sont également entrés alternativement après chaque deuxième segment de signal dans des dispositifs de mémorisation et sont lus sur ces derniers avec transformation de temps dans le sens d'une augmentation de la largeur de bande et que le contenu d'une mémoire pour le signal de luminance et le contenu d'une mémoire pour les signaux de différence de couleur sont reliés alternativement aux dispositifs d'enregistrement d'un canal d'enregistrement et le contenu d'une deuxième mémoire pour le signal de luminance (Y) et d'une deuxième mémoire pour les signaux de différence de couleur sont reliés alternativement aux dispositifs d'enregistrement du deuxième canal d'enregistrement, et que pour la restitution les segments de signal des deux types sont reconvertis par des transformations de temps réciproques et la position de fréquence porteuse originelle et les segments de signal de chaque type sont réunis en un flux de signal cohérent et démodulés.

4. Procédé suivant la revendication 3, caractérisé en ce que les positions de fréquence porteuse pour les segments de signal des deux types se comportent comme 3 : 1.

5. Procédé suivant la revendication 3 ou 4, caractérisé en ce que les segments de signal portés du premier type sont amenés par des transformations de temps sur une largeur de bande nécessaire réduite dans le rapport 1,5, et que les segments de signal du deuxième type sont amenés par une deuxième transformation de temps sur une largeur de bande nécessaire augmentée d'un facteur 2.

6. Procédé suivant l'une des revendications précédentes, caractérisé en ce que les segments de signal transformés dans le temps de l'un ou de l'autre type sont placés sur des pistes de signal juxtaposées et enregistrés à peu près simultanément.

7. Procédé suivant la revendication 6, caractérisé en ce que les segments de signal avec le contenu du signal de différence de couleur (U) et ceux avec le signal de différence de couleur (V) soient respectivement enregistrés dans deux canaux juxtaposés.

8. Procédé d'enregistrement et/ou de restitution de signaux vidéo couleur dans lequel les signaux vidéo couleur sont éclatés à l'enregistrement en une information de luminance et une information de couleur et dans lequel les informations éclatées sont soumises à une division dans le temps en segments de signal d'une longueur déterminée, caractérisé en ce que des segments de signal de l'information de luminance et de l'information de couleur sont envoyés alternativement ou cycliquement, du côté de l'enregistrement, à plusieurs dispositifs de mémorisation (35 à 38; 51 à 54; 140 à 143) à travers des premiers dispositifs de coupure (33 et 34; 61 à 64; 81 à 84; 137 et 138) et des signaux de sortie des dispositifs de mémorisation (35 à 38; 51 à 54; 140 à 143) sont transmis pour enregistrement à au moins deux convertisseurs magnétiques (1.1, 1.2), à travers deux dispositifs de coupure (39 et 40; 86 et 87; 144 et 145) et que des signaux côté restitution, qui sont reçus par des convertisseurs magnétiques (1.1, 1.2), sont envoyés aux dispositifs de mémorisation (35 à 38; 51 à 54; 140 à 143) à travers les deuxièmes dispositifs de coupure (39 et 40; 86 et 87; 144 et 145) et que l'information de luminance originelle et l'information de couleur sont tirées de signaux de sortie des dispositifs de mémorisation (35 à 38; 51 à 54; 140 à 143) avec les premiers dispositifs de coupure (33 et 34; 61 à 64; 81 à 84; 137 et 138).

9. Procédé suivant la revendication 8, caractérisé en ce que des signaux d'horloge d'une série de sources de signal d'horloge sont envoyés à travers des dispositifs de coupure (55 à 58) à des entrées d'horloge des dispositifs de mémorisation (51 à 54).

10. Procédé suivant la revendication 9, caractérisé en ce que les fréquences de cycles des signaux d'horloge sont accouplés côté enregistrement dans le rapport 2 : 3 : 4 et côté restitution dans le rapport 1,5 : 2 : 3.

Fig. 1

Fig. 2

Luminanz (L)

31 33

L SP. 35 L'

C SP. 37 C'

Kanal 1

39 1,1

10

1,1 39

L' SP. 35 L

C' SP. 37 C

Luminanz (L)

33

Chrominanz (C)

32 34

L SP. 36 L'

C SP. 38 C'

Kanal 2

40 1,2

1,2 40

L' SP. 36 L

C' SP. 38 C

Chrominanz (C)

34

Fig. 3

Luminanz
Chrominanz

| L1 | L2 | L3 | L4 | L5 | L6 | L7 |
| C1 | C2 | C3 | C4 | C5 | C6 | C7 |

Transformiert

Kanal 1

| L'1 | C'1 | L'3 | C'3 | L'5 | C'5 |

Kanal 2

| L'2 | C'2 | L'4 | C'4 | L'6 | C'6 |

Rücktransformiert

| L1 | L2 | L3 | L4 | L5 |
| C1 | C2 | C3 | C4 | C5 |

Fig. 4

Luminanz (L)

Chrominanz (C)

Fig. 5

Fig. 5a

Fig. 5b

SP1  SP2  SP3  SP4

Kanal 1

Kanal 2

| | L | C |
|---|---|---|
| Einlesen | 3f | 2f |
| Auslesen | 2f | 4f |

| | L' | C' |
|---|---|---|
| Einlesen | 2f | 3f |
| Auslesen | 3f | 1,5f |

5

EP 0 072 507 B1

Luminanz (L)
L1 L2 L3 L4 L5 L6 L7 L8
Chrominanz (C)
C1 C2 C3 C4 C5 C6 C7 C8

SP 1   L'1   C'2    L'5   C'6

SP 2   L'3   C'4    L'7   C'8

SP 3   L'2   C'3    L'6   C'7

SP 4   L'4   C'5    L'8   C'9

Kanal 1   L'1   C'2   L'3   C'4   L'5   C'6   L'7   C'8

Kanal 2   L'2   C'3   L'4   C'5   L'6   C'7   L'8   C'9

SP 1   L1   C2    L5   C6

SP 2   L3   C4

SP 3   L2   C3    L6   C7

SP 4   L4   C5

Luminanz (L)
L1 L2 L3 L4 L5 L6 L7
Chrominanz (C)
C1 C2 C3 C4 C5 C6 C7

Fig.6

# Fig. 7

# Fig. 8

| LUMINANZ | Y | Y | Y | Y |
|---|---|---|---|---|

CHROMINANZ — u v u v
(u,V SERIELL) |←— H —→|←— H —→|

KANAL1 — FM'y FM'y FM'u FM'v FM'y FM'y FM'u
KANAL2 — FM'y FM'y FM'u FM'v FM'y FM'y FM'u

|←— 1.5H —→|←— 1.5H —→|0.5H|0.5H|←— 1.5H —→|